# EUROPEAN PATENT SPECIFICATION

(11) **EP 2 570 282 B1**
(45) Date of publication and mention of the grant of the patent: **07.12.2016**
(21) Application number: 11780501.0
(22) Date of filing: 25.04.2011
(51) Int. Cl.: B60H 1/22, B60H 1/32, B60H 1/00

(54) **AIR-CONDITIONER FOR VEHICLE**
KLIMAANLAGEVORRICHTUNG FÜR FAHRZEUG
DISPOSITIF DE CLIMATISATION POUR VÉHICULE

(30) Priority: 14.05.2010 JP 2010111801
(43) Date of publication of application: 20.03.2013
(73) Proprietor: Calsonic Kansei Corporation, Saitama-shi Saitama 331-8501 (JP)
(72) Inventor: OGASAWARA, Takeshi, Saitama-shi Saitama 331-8501 (JP); HATAKEYAMA, Jun, Saitama-shi Saitama 331-8501 (JP)
(74) Representative: Grünecker Patent- und Rechtsanwälte PartG mbB
(86) International application number: PCT/JP2011/060086
(87) International publication number: WO 2011/142244

(56) References cited:
- EP-A1- 0 681 933
- DE-A1- 19 916 691
- JP-A- 6 278 451
- JP-A- 7 172 154
- JP-A- 7 266 860
- JP-A- 8 226 727
- JP-A- 11 254 956
- JP-A- H11 254 956
- JP-A- 2000 052 757
- JP-A- 2001 097 026
- JP-A- 2001 138 735
- JP-A- 2009 234 387
- JP-A- 2009 234 387
- US-A- 5 586 448
- US-A1- 2004 074 246

## Description

### TECHNICAL FIELD

The present invention relates to an air-conditioner for a vehicle, which includes a vapor-compression refrigeration cycle to absorb heat from air outside a passenger compartment and achieves heating of an inside of the passenger compartment.

### BACKGROUND ART

For example, in an electrical vehicle, heat from a drive source can be hardly utilized for heating of an inside of a passenger compartment. Therefore, various types of air-conditioners for a vehicle are proposed, in which a vapor-compression refrigeration cycle is utilized to absorb heat from air outside a passenger compartment by refrigerant recirculating in the cycle and the heat is used for heating of an inside of a passenger compartment.

EP 0 681 933 A1 *discloses a heat pump type air conditioning system which can instantly heat air in the passenger room after start-up and which can effectively dehumidify the heated air in the passenger room. At the start-up of the system, the refrigerant is directed toward an ou tside evaporator so that the system operates as a pure heater for quickly heating the passenger room. When the refrigerant pressure exceeds a set pressure, a pressure adjusting valve is opened, so that the refrigerant flow is automatically divided into two flows, one being directed toward the outside evaporator and the other being directed toward an inside evaporator. That is, one part of the refrigerant is used as a medium for collecting heat from the outside air, and the other part is used as a medium for collecting heat from the air in the duct.*

*A vehicular air-conditioning device is disclosed in* JP H11 254956 A*, which is capable of performing a cooling operation or a dehumidifying and heating operation.*

However, there may be a case where an outside heat exchanger is frozen (coated with ice) for exchanging heat with air outside a passenger compartment. Since heat exchange performance reduces in the case where the outside heat exchanger is frozen, a desired heating operation cannot be maintained.

US 5 586 448 A *relates to the configuration of an heat-pump air-conditioner for air-conditioning an electric vehicle. When the external heat exchanger is not frozen, the air-conditioner is operated in a normal warming mode to warm the electric vehicle. However, when it is determined that the external heat exchanger is frozen, the air-conditioner is operated in a cooling mode in which the refrigerant is circulated at a high temperature and under a high pressure to the external heat exchanger in order to defrost the external heat exchanger.*

*In* an air-conditioner for a vehicle disclosed in JP 2000 203249 A*,* its vapor-compression refrigeration cycle is provided with a hot-gas bypass path for bypassing an inside condenser so as to flow high-pressure and high-temperature refrigerant compressed by a compressor to an inside condenser and also to an outside heat exchanger via the hot-gas bypass path. Since the high-temperature refrigerant flows through the outside heat exchanger, the outside heat exchanger can be prevented from freezing. In addition, air to be supplied into the passenger compartment is heated by the inside condenser. In this manner, when the outside *heat* exchanger freezes, its freezing can be solved and also a heating operation of the passenger compartment can be maintained.

In addition, an air-conditioner for a vehicle disclosed in JP H10 287125 A can perform a heating operation and a dehumidifying operation, and a blown-out temperature of conditioned air is adjusted in a humidifying operation by a rotational speed control of a compressor. But, a technical solution for maintaining a heating operation under freezing of an outside heat exchanger is not disclosed.

### SUMMARY OF INVENTION

In the above-mentioned conventional air-conditioner, larger drive power for increasing a rotational speed of the compressor is needed under an operation for solving the freezing of the outside heat exchanger than that under a normal heating operation in order to flow the refrigerant to the inside condenser and the outside heat exchanger. But, in a case of an electrical vehicle in which power for a compressor depends on a vehicle battery, it is not suitable for practical used because its travel range becomes *shortened.*

Therefore, an object of the present invention is to provide an air-conditioner for a vehicle that can maintain a heating operation without increasing drive power for its compressor even when its outside heat exchanger is frozen (coated with ice).

An aspect of the present invention provides an air-conditioner for a vehicle that includes a vapor-compression refrigeration cycle explained below, a determination unit, and a controller. The refrigeration cycle includes a compressor for compressing refrigerant, an inside condenser for exchanging heat between refrigerant compressed by the compressor and air to be supplied to a passenger compartment to heat the air, an outside heat exchanger for exchanging heat between refrigerant and air outside a passenger compartment, and an inside evaporator for exchanging heat between refrigerant and air to be supplied to a passenger compartment. In addition, the refrigeration cycle is capable of operating an outside-air heat-absorption heating operation in which refrigerant absorbs heat at the outside heat exchanger and refrigerant radiates heat at the inside condenser, and an inside-air heat-absorption heating operation in which refrigerant absorbs heat at the inside evaporator and refrigerant radiates heat at the inside condenser. The determination unit determines whether or not the outside heat exchanger is frozen. The controller changes over the outside-air heat-absorption heating operation to the inside-air heat-absorption heating operation when the determination unit determines that the outside heat exchanger is frozen. *The* refrigeration cycle further includes a pressure regulator for regulating pressure of refrigerant to be supplied to the outside heat exchanger, a first bypass path bypassing the outside heat exchanger, a first flowpath changeover unit for changing over a refrigerant flow to the outside heat exchanger or to the first bypass path, a pressure reducer for reducing pressure of refrigerant to be supplied to the inside evaporator, a second bypass path bypassing the inside evaporator, and a second flowpath changeover unit for changing over a refrigerant flow to the inside evaporator or to the second bypass path. In the outside-air heat-absorption heating operation, a refrigerant path *is set,* in which refrigerant compressed by the compressor flows sequentially through the inside condenser, the pressure regulator, the outside heat exchanger and the second bypass path, and then returns to the compressor, wherein the pressure regulator decompresses refrigerant. *In* the inside-air heat-absorption heating operation, a refrigerant path *is set,* in which refrigerant compressed by the compressor flows sequentially through the inside condenser, the first bypass path, the pressure reducer and the inside evaporator, and then returns to the compressor, wherein the pressure reducer decompresses refrigerant.

According to the aspect, when the outside heat exchanger freezes in the outside-air heat-absorption heating operation in which the outside heat exchanger functions as an evaporator, it is changed over to the inside-air heat-absorption heating operation in which refrigerant absorbs heat at the inside evaporator to maintain the heating operation. Only a heat exchanger for performing heat absorption is different between the outside-air heat-absorption heating operation and the inside-air heat-absorption heating operation, so that it is not needed to increase drive power for the compressor in order to maintain the heating operation. Therefore, the heating operation can be maintained without increasing drive power for the compressor when the outside heat exchanger is frozen (coated with ice).

Here, it is preferable that the refrigeration cycle is capable of further operating a re-heat cooling operation in which refrigerant absorbs heat at the inside evaporator and refrigerant radiates heat at both of the inside condenser and the outside heat exchanger, and, in the re-heat cooling operation, set is a refrigerant path in which refrigerant compressed by the compressor flows sequentially through the inside condenser, the pressure regulator, the outside heat exchanger, the pressure reducer and the inside evaporator, and then returns to the compressor, wherein the pressure regulator doesn't decompress refrigerant.

In addition, it is preferable that the air-conditioner further includes an outside-heat-exchanger passing-through air temperature detector for detecting temperature of air after passing through the outside heat exchanger, and a refrigerant temperature detector for detecting temperature of refrigerant at an outlet of the outside heat exchanger, wherein the determination unit determines whether or not the outside heat exchanger is frozen based on *a difference* between the temperature of air detected by the outside-heat-exchanger passing-through air temperature detector and the temperature of refrigerant detected by the temperature detector and the temperature of refrigerant temperature detector.

In addition, it is preferable that, in the inside-air heat-absorption heating operation, air inside a passenger-compartment is supplied to the inside evaporator, and then supplied to the inside condenser.

In addition, it is preferable that the air-conditioner further includes a heater for heating air to be supplied to a passenger compartment, a foot-outlet temperature detector for detecting temperature of air blowing out from a foot outlet port, and a defroster/vent-outlet temperature detector for detecting temperature of air blowing out from a defroster outlet port and a vent outlet port, wherein the controller controls a heating amount of the heater based on the temperatures of air detected by the foot-outlet temperature detector and the defroster/vent-outlet temperature detector.

In addition, it is preferable that the air-conditioner further includes an inlet-air temperature and humidity detector for detecting temperature and humidity of air to be supplied to the inside evaporator, and an outside-air temperature detector for detecting temperature of outside air, wherein the controller calculates dew-point temperature in a passenger compartment based on detection results of the inlet-air temperature and humidity detector and the outside-air temperature detector, and controls a humidifying amount of the inside evaporator based on the calculated dew-point temperature.

In addition, it is preferable that the outside heat exchanger includes a plurality of tubes, a pair of tanks disposed on both ends of the plurality of tubes, a reservoir tank for accumulating refrigerant, and a plurality of partitions, each of the tanks being provided with at least one of the plurality of partitions, and a partition positioned most downstream along a refrigerant flow path within the outside heat exchanger among the plurality of partitions is configured to be capable of guiding introduction of refrigerant into the reservoir tank and to flow refrigerant with low flow resistance.

### BRIEF DESCRIPTION OF DRAWINGS

[Fig. 1] It is a configuration diagram of an air conditioner for a vehicle according to an embodiment.
[Fig. 2] It is an explanatory diagram showing a refrigerant path in an outside-air heat-absorption heating operation of the air-conditioner.
[Fig. 3] It is an explanatory diagram showing a refrigerant path in an inside-air heat-absorption heating operation of the air-conditioner.
[Fig. 4] It is an explanatory diagram showing a refrigerant path in a re-heat cooling operation of the air-conditioner.

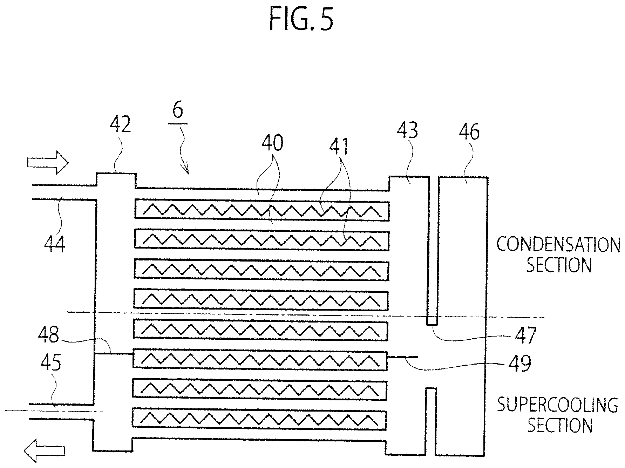

[Fig. 5] It is a configuration diagram of an outside heat exchanger in the air-conditioner.
[Fig. 6] It is a flow chart showing operations of the air-conditioner.
[Fig. 7] It is a configuration diagram of a modified example of the outside heat exchanger.

### DESCRIPTION OF EMBODIMENTS

Hereinafter, an embodiment of an air-conditioner for a vehicle will be explained with reference to the drawings.

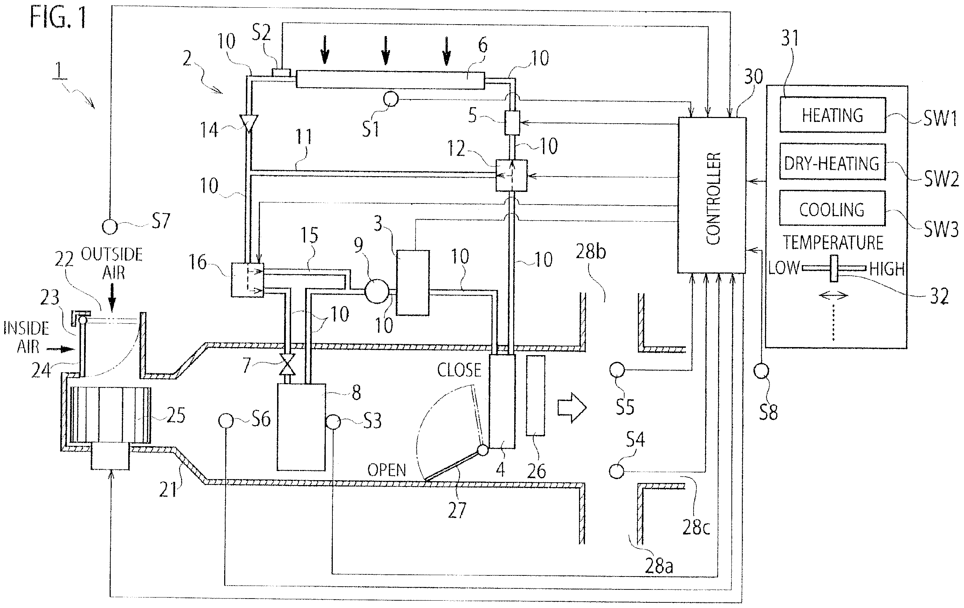

As shown in Fig. 1, an air-conditioner 1 includes a vapor-compression refrigeration cycles 2. The refrigeration cycle 2 includes a compressor 3 for compressing refrigerant, an inside condenser 4, an electromagnetic valve (pressure regulator) 5, an outside heat exchanger 6, a thermostatic expansion valve (pressure reducer) 7 for decompressing the refrigerant, an inside evaporator 8, and an accumulator 9. On the refrigeration cycle 2, the electromagnetic valve 5 is disposed downstream of the inside condenser 4. The outside heat exchanger 6 is disposed downstream of the electromagnetic valve 5. The thermostatic expansion valve 7 is disposed downstream of the outside heat exchanger 6. The inside evaporator 8 is disposed downstream of the thermostatic expansion valve 7. The accumulator 9 is disposed downstream of the inside evaporator 8. These components are connected by refrigerant pipes 10.

The compressor 3 is, for example, a vane type model, and its drive or stop and rotational speed are controlled by commands from a controller 30.

The inside condenser 4 is disposed in an air-conditioner case 21 and downstream of the inside evaporator 8 along a conditioned-air flow. At the inside condenser 4, heat is exchanged between high-pressure and high-temperature refrigerant compressed by the compressor 3 and air passing through the air-conditioner case 21 (air to be supplied to the passenger compartment). The inside condenser 4 heats the air by a heat radiation action of the refrigerant.

The electromagnetic valve 5 possesses a throttle mechanism, and can flow the refrigerant to the outside heat exchanger 6 without decompressing it or flow the refrigerant to the outside heat exchanger 6 while decompressing it. The electromagnetic valve 5 is controlled by the controller 30.

The outside heat exchanger 6 is, for example, disposed in an engine compartment. At the outside heat exchanger 6, heat is exchanged between the refrigerant after passing through the inside condenser 4 and air outside the passenger compartment. The outside heat exchanger 6 functions as a condenser in a re-heat cooling operation to radiate heat from the refrigerant to the air, and functions as an evaporator in an outside-air heat-absorption heating operation to absorb heat from the air to the refrigerant. An internal configuration of the outside heat exchanger 6 will be explained later in detail.

The thermostatic expansion valve 7 includes a feeler bulb (not shown) attached to an outlet side of the inside evaporator 8. Valve opening of the thermostatic expansion valve 7 is automatically adjusted so that superheating degree of refrigerant on the outlet side of the inside evaporator 8 is kept at a given value.

The inside evaporator 8 is disposed in the air-conditioner case 21 and upstream of the inside condenser 4 along the conditioned-air flow. At the inside evaporator 8, heat is exchanged between the refrigerant decompressed by the thermostatic expansion valve 7 and the air passing through the air-conditioner case 21 (the air to be supplied to the passenger compartment). The inside evaporator 8 cools and dehumidifies the air by a heat absorption action of the refrigerant.

The accumulator 9 temporarily accumulates some of the refrigerant sent from the inside evaporator 8 as residual refrigerant, and sends only refrigerant gas to the compressor 3.

An outside-air intake port 22 for introducing air outside the passenger compartment and an inside-air intake port 23 for introducing air inside the passenger compartment are formed on the air-conditioner case 21. The outside-air intake port 22 and the inside-air intake port 23 are opened and closed by an intake door 24. The intake door 24 is controlled by the controller 30. A blower 25 is provided in the air-conditioner case 21. The blower 25 intakes outside air or inside air into the air-conditioner case 21 according to a position of the intake door 24. An air mix door 27 disposed upstream of the inside condenser 4 and a heater 26 disposed downstream of the inside condenser 4 are provided in the air-conditioner case 21. The air mix door 27 adjusts mixture ratio of blown air passing through the inside condenser 4 and the heater 26 and blown air bypassing them. The heater 26 is another heat source independent from the refrigeration cycle 2, for example, a PTC (Positive Temperature Coefficient) heater. An amount of heat generation by the heater 26 is controlled by the controller 30.

A foot outlet port 28a, a defroster outlet port 28b and a vent outlet port 28c are provided downstream of the heater 26 in the air-conditioner case 21. The conditioned air is supplied into the passenger compartment through these outlet ports. Note that the heater 26 is arranged so that air after passing through the heater 26 is introduced more to the defroster outlet port 28b and the vent outlet port 28c than to the foot outlet port 28a.

In addition, the refrigeration cycle 2 includes a first bypass path 11, a first flowpath changeover valve (first flowpath changeover unit) 12, and a check valve 14. The refrigerant from the inside condenser 4 can bypass the outside heat exchanger 6 through the first bypass path 11. The first flowpath changeover valve 12 is provided at a connected position of an upstream end of the first bypass path 11 with the refrigerant pipe 10, and changes over the refrigerant flow to the outside heat exchanger 6 or to the first bypass path 11. The check valve 14 is arranged downstream of the outside heat exchanger 6 and upstream of a connected position of a downstream end of the first bypass path 11 with the refrigerant pipe 10, and prevents the refrigerant from flowing backward to the outside heat exchanger 6 in an inside-air heat-absorption heating operation.

Further, the refrigeration cycle 2 includes a second bypass path 15, and a second flowpath changeover valve (first flowpath changeover unit) 16. The refrigerant can bypass the inside evaporator 8 through the second bypass path 15. The second flowpath changeover valve 16 is provided at a connected position of an upstream end of the second bypass path 15 with the refrigerant pipe 10, and changes over the refrigerant flow to the inside evaporator 8 or to the second bypass path 15.

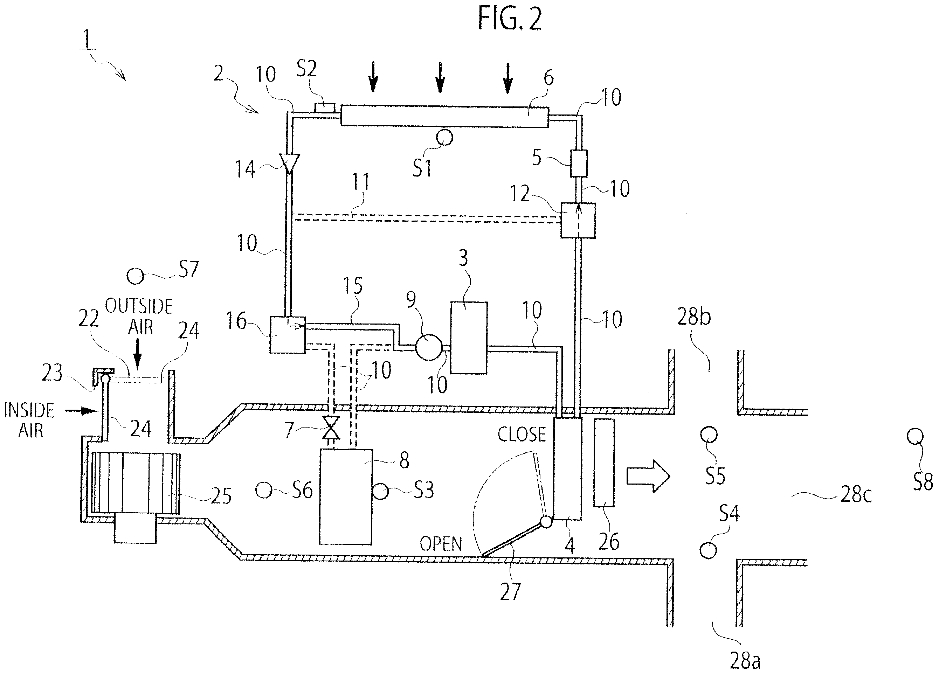

The first bypass path 11 and the second bypass path 15 changes the refrigerant path by being controlled by the controller 30. Specifically, in the outside-air heat-absorption heating operation, as shown in Fig. 2, the refrigerant path is changed over so that the refrigerant compressed by the compressor 3 flows sequentially through the inside condenser 4, the electromagnetic valve 5, the outside heat exchanger 6 and the second bypass path 15, and then returns to the compressor 3. The electromagnetic valve 5 decompresses the refrigerant, and the outside heat exchanger 6 functions as an evaporator.

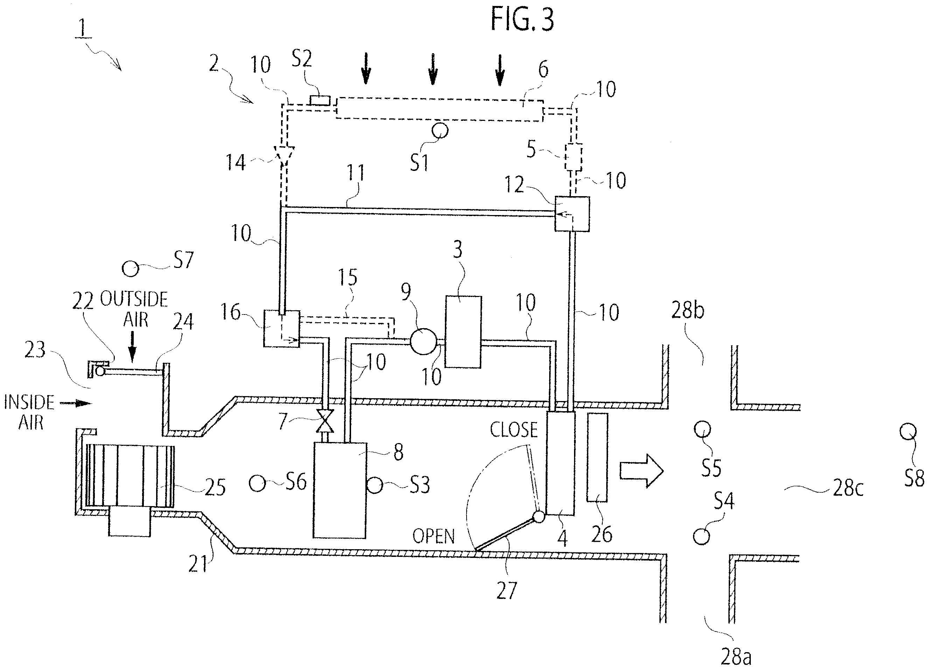

In addition, in the inside-air heat-absorption heating operation, as shown in Fig. 3, the refrigerant path is changed over so that the refrigerant compressed by the compressor 3 flows sequentially through the inside condenser 4, the first bypass path 11, the thermostatic expansion valve 7 and the inside evaporator 8, and then returns to the compressor 3. The thermostatic expansion valve 7 decompresses the refrigerant, and the inside evaporator 8 functions as an evaporator.

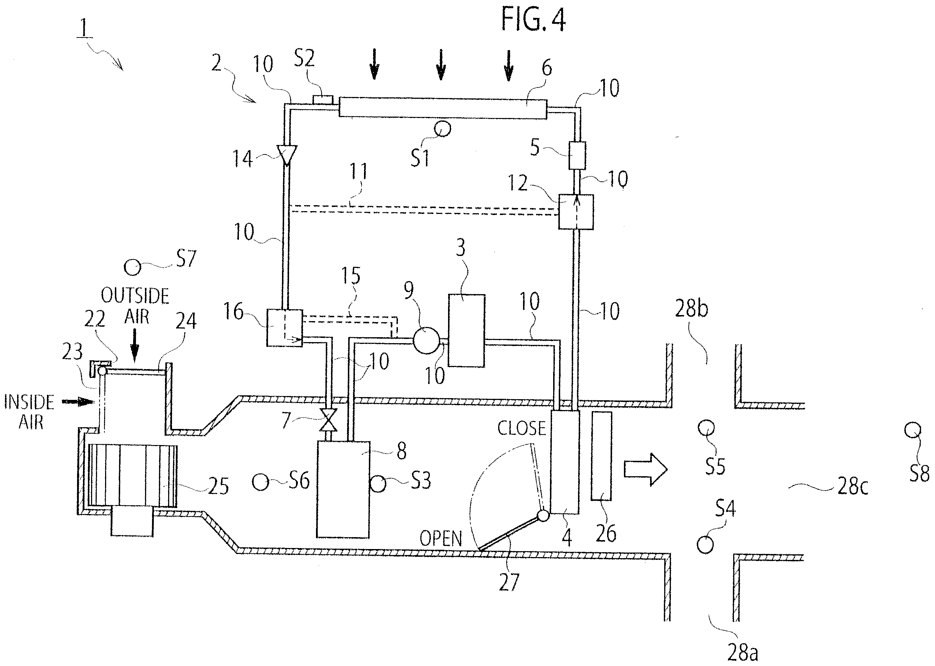

In addition, in the re-heat cooling operation, as shown in Fig. 4, the refrigerant path is changed over so that the refrigerant compressed by the compressor 3 flows sequentially through the inside condenser 4, the electromagnetic valve 5, the outside heat exchanger 6, the thermostatic expansion valve 7 and the inside evaporator 8, and then returns to the compressor 3. The electromagnetic valve 5 allows the refrigerant to flow therethrough without decompressing it, and the outside heat exchanger 6 functions as a condenser.

In addition, the air-conditioner 1 includes an outside-heat-exchanger passing-through air temperature sensor (outside-heat-exchanger passing-through air temperature detector) S1, a refrigerant temperature sensor (refrigerant temperature detector) S2, an evaporator-outlet-port air temperature sensor (evaporator-outlet port air temperature detector) S3, a foot-outlet temperature sensor (foot-outlet temperature detector) S4, a defroster/vent-outlet temperature sensor (defroster/vent-outlet temperature detector) S5, an inlet-air temperature and humidity sensor (inlet-air temperature and humidity detector) S6, an outside-air temperature sensor (outside-air temperature detector) S7, and an passenger-compartment temperature sensor (passenger-compartment temperature detector) S8. The outside-heat-exchanger passing-through air temperature sensor S1 detects temperature of air after passing through the outside heat exchanger 6. The refrigerant temperature sensor S2 detects temperature of refrigerant at an outlet of the outside heat exchanger 6. The evaporator-outlet-port air temperature sensor S3 detects temperature of air after passing through the inside evaporator 8. The foot-outlet temperature sensor S4 detects temperature of air blowing out from the foot outlet port 28a. The defroster/vent-outlet temperature sensor S5 detects temperature of air blowing out from the defroster outlet port 28b and the vent outlet port 28c. The inlet-air temperature and humidity sensor S6 detects temperature and humidity of air introduced into the air-conditioner case 21 (air to be supplied to the inside evaporator 8 and the inside condenser 4). The outside-air temperature sensor S7 detects temperature of outside air. The inside-air temperature sensor S8 detects temperature in the passenger compartment.

The controller 30 controls the compressor 3, the first flowpath changeover valve 12, the second flowpath changeover valve 16, the heater 26, the air mix door 27 mad so on based on data detected by the various sensors S1 to S8, data input from an operation panel 31 and so on. In addition, the controller 30 functions as a determination unit for determining whether or not the outside heat exchanger 6 is frozen. The controller 30 determines that the outside heat exchanger 6 is frozen (coated by ice) when difference between the temperature of air after passing through the outside heat exchanger 6 (detected by the outside-heat-exchanger passing-through air temperature sensor S1) and the temperature of refrigerant at an outlet of the outside heat exchanger 6 (detected by the refrigerant temperature sensor S2) becomes equal-to or more-than a predetermined temperature difference (e.g. 10°C).

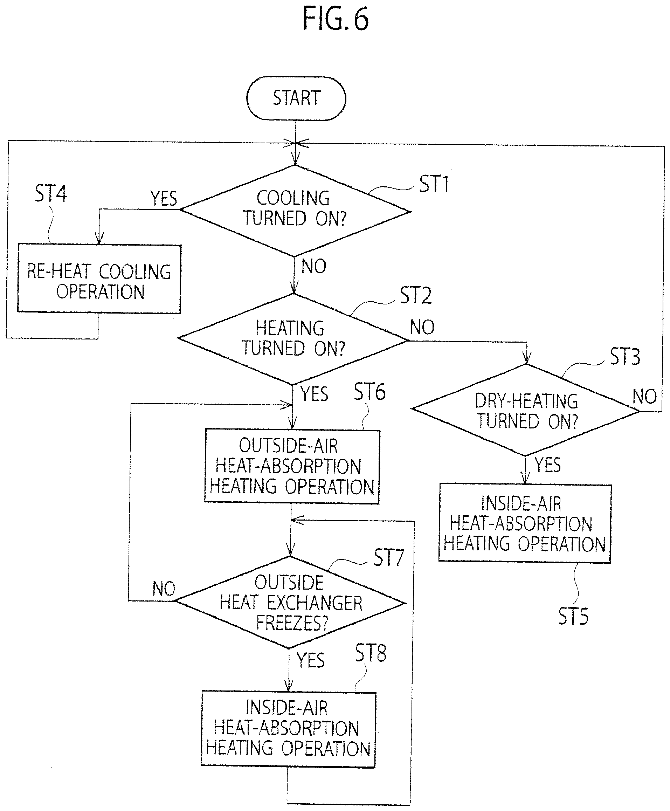

The operation panel 31 includes a heating switch SW1, a dry-heating SW2, a cooling switch SW3, a temperature control knob 32, and so on. Target temperature in the passenger compartment is set by the temperature control knob 32. The controller 30 executes a control shown in a flowchart of Fig. 6 based on a turning-on operation of the heating switch SW1, the dry-heating SW2 or the cooling switch SW3. Contents of the control will be explained later in detail. In addition, the controller 30 controls the heating operation, the dry-heating operation or the cooling operation so that the temperature detected by the passenger-compartment temperature sensor S8 becomes the target temperature.

Next, configuration of the outside heat exchanger will be explained.= The outside heat exchanger 6 includes plural tubes 40 extending horizontally and aligned vertically with spacing therebetween, a heat radiation fins 41 each disposed between neighboring tubes 40, and a pair of tanks 42 and 43 disposed on both ends of the plural tubes 40. On the tank 42, a refrigerant inlet port 44 is provided at its upper end, and a refrigerant outlet port 45 is provided at its lower end. On the tank 43, a reservoir tank 46 is provided. An inside of the tank 43 and an inside of the reservoir tank 46 are communicated with each other by a communication pipe 47 provided on a side of their bottoms.

In the insides of the tanks 42 and 43, partitions 48 and 49 are provided, respectively. The partition 48 in the tank 42 is provided at the same height level as that of the communication pipe 47, and completely divides the inside of the tank 42. On the other hand, the partition 49 in the tank 43 is disposed downstream, with respect to the two partitions 48 and 49, along the refrigerant flow path within the outside heat exchanger 6. In addition, the partition 49 is provided at the same height level as that of the communication pipe 47. The partition 49 mostly divides the inside of the tank 43, but doesn't divide an inside of the communication pipe 47. Therefore, the partition 49 guides introduction of refrigerant liquid into the reservoir tank 46 when the outside heat exchanger 6 functions as a condenser, and flows vaporized refrigerant from top to bottom in the tank 43 via the communication pipe 47 with low flow resistance when the outside heat exchanger 6 functions as an evaporator.

Next, operations of the air-conditioner 1 for a vehicle will be explained. As shown in Fig. 6, the controller 30 continuously checks whether or not any of the heating switch SW1, the dry-heating switch SW2 and the cooling switch SW3 is turned on (steps ST1 to ST3).

When the cooling switch SW3 is turned on (YES in step ST1), the controller 30 performs the re-heat cooling operation (step ST4). In the re-heat cooling operation, as shown in Fig. 4, the first flowpath changeover valve 12 is changed over so as to flow refrigerant to the outside heat changed
6, and the second flowpath changeover valve 16 is changed over so as to flow refrigerant to the inside evaporator 8. The electromagnetic valve 5 is full-opened and thereby the refrigerant passes through it without being decompressed. The intake door 24 is set to an inside-air intake side or an inside-air intake side (to the inside-air intake side in Fig. 4).

In the re-heat cooling operation, the refrigerant compressed by the compressor 3 recirculates along a refrigerant path passing sequentially through the inside condenser 4, the first flowpath changeover valve 12, the electromagnetic valve 5, the outside heat exchanger 6, the second flowpath changeover valve 16, the thermostatic expansion valve 7, the inside evaporator 8, and the accumulator 9. The high-temperature and high-pressure refrigerant compressed by the compressor 3 radiates heat to air at the inside condenser 4 and the outside heat exchanger 6. The refrigerant that is made low-temperature by the heat radiation and then made low-pressure by the thermostatic expansion valve 7 absorbs heat from air at the inside evaporator 8. Therefore, air blown through the air-conditioner case 21 is cooled by the inside evaporator 8 and then some or all (depending on a position of the air mix door 7) of the air is re-heated by the inside condenser 4. As a result, desired-temperature cooled air is generated.

On the other hand, when the dry-heating switch SW2 is turned on (YES in step ST3), the controller 30 performs the inside-air heat-absorption heating operation (step ST5). In the inside-air heat-absorption heating operation, as shown in Fig. 3, the first flowpath changeover valve 12 is changed over so as to flow refrigerant to the first bypass path 11, and the second flowpath changeover valve 16 is changed over so as to flow refrigerant to the inside evaporator 8. The intake door 24 is set to the inside-air intake side. The air mix door 27 is set to its full-opened position, for example.

In the inside-air heat-absorption heating operation, the refrigerant compressed by the compressor 3 recirculates along a refrigerant path passing sequentially through the inside condenser 4, the first bypass path 11, the second flowpath changeover valve 16, the thermostatic expansion valve 7, the inside evaporator 8, and the accumulator 9. The high-temperature and high-pressure refrigerant compressed by the compressor 3 radiates heat to air at the inside condenser 4. The refrigerant that is made low-temperature by the heat radiation and then made low-pressure by the thermostatic expansion valve 7 absorbs heat from air at the inside evaporator 8. Therefore, air blown through the air-conditioner case 21 is cooled by the inside evaporator 8 and then all of the air is re-heated by the inside condenser 4. As a result, desired-temperature heated air is generated.

Air is cooled to almost 0 degree and thereby dehumidification is done at the inside evaporator 8, and the dehumidified dry air is supplied to the passenger compartment and thereby fogging of windows is removed.

Note that, in a case where a heating capacity of the inside condenser 4 is small, the heater 26 is operated to generate desired-temperature heated air.

In the inside-air heat-absorption heating operation, rotational speed of the compressor 3 is controlled based on temperature detected by the evaporator-outlet-port air temperature detector S3 so that the inside evaporator 8 becomes non-freezing temperature (e.g. 0°C to 3°C), and thereby humidification performance is ensured.= In the inside-air heat-absorption heating operation, since characteristics of the refrigeration cycle is determined by the inside evaporator 8 and the inside condenser 4, a heating amount by the inside condenser 4 is automatically determined when the rotational speed of the compressor 3 is determined based on the humidification performance. Therefore, temperature of conditioned air can be controlled by operating the heater 26 when wanting to increase the heating amount and changing a position of the air mix door 27 when wanting to decrease the heating amount.

In addition, when the heating switch SW1 is turned on (YES in step ST2), the controller 30 performs the outside-air heat-absorption heating operation (step ST6). In the outside-air heat-absorption heating operation, as shown in Fig. 2, the first flowpath changeover valve 12 is changed over so as to flow refrigerant to the outside heat exchanger 6, and the second flowpath changeover valve 16 is changed over so as to flow refrigerant to the second bypass path 15. =A valve position of the electromagnetic valve 5 is adjusted so as to decompress refrigerant. The intake door 24 is set to the outside-air intake side. The air mix door 27 is set to its full-opened position, for example.

The refrigerant compressed by the compressor 3 recirculates along a refrigerant path passing sequentially through the inside condenser 4, the outside heat exchanger 6, the second flowpath changeover valve 16, the second bypass path 15, and the accumulator 9. The high-temperature and high-pressure refrigerant compressed by the compressor 3 radiates heat to air at the inside condenser 4. The refrigerant that is made low-temperature by the heat radiation and then made low-pressure by the electromagnetic valve 5 absorbs heat from air at the outside heat exchanger 6. Therefore, air blown through the air-conditioner case 21 is heated by the inside condenser 4 without being cooled by the inside evaporator 8. As a result, desired-temperature heated air is generated. In the outside-air heat-absorption heating operation, since air is not cooled by the inside evaporator 8, larger-capacity heating performance can be obtained than that in the inside-air heat-absorption heating operation.

In the outside-air heat-absorption heating operation, since air outside the passenger compartment with a little humidity is introduced into the air-conditioner case 21 (outside-air intake), fogging of windows can be removed.

In the outside-air heat-absorption heating operation, it is judged whether or not the outside heat exchanger 6 is frozen (coated with ice) every given time intervals (step ST7).

When it is judged that the outside heat exchanger 6 is frozen (YES in step ST7), the outside-air heat-absorption heating operation is changed over to the inside-air heat-absorption heating operation (step ST8). As a result, the refrigerant absorbs heat not from the outside air passing through the outside heat exchanger 6 but from the air passing through the inside evaporator 8, and the heating operation is maintained.

Also in the inside-air heat-absorption heating operation after the step ST7 is affirmed, it is judged whether or not the outside heat exchanger 6 is frozen (i.e. whether or not the freezing is solved) every given time intervals (step ST7). When it is judged that the freezing of the outside heat When it is judged that the freezing of the outside heat exchanger 6 is solved (NO in step ST7), the operation is returned to the outside-air heat-absorption heating operation, i.e. an operation selected by the user (step ST6). Note that, in a case where it is judged that the freezing of the outside heat exchanger 6 is solved (the outside heat exchanger 6 is not frozen) (No in step ST7), various ways are possible for when returning to the outside-air heat-absorption heating operation. For example, it may be possible to return the operation to the outside-air heat absorption heating operation just after the step ST7 is disaffirmed, or it may be possible to return the operation to the outside-air heat-absorption heating operation when a given time has elapsed after the step ST7 is disaffirmed.

As explained above, the heating operation is continued by changing over the operation to the inside-air heat-absorption heating operation in which refrigerant absorbs heat at the inside evaporator 8 if the outside heat exchanger 6 is frozen during the outside-air heat-absorption heating operation in which the outside heat exchanger 6 is functioned as an evaporator. Since only a heat exchanger for absorbing heat is different between the outside-air heat-absorption heating operation and the inside-air heat-absorption heating operation, it is not needed to increase drive power for the compressor 3 in order to continue the heating operation. Therefore, the heating operation can be maintained without increasing drive power for the compressor 3 even when the outside heat exchanger 6 is frozen (coated with ice).

Since the heating operation can be maintained even when the outside heat exchanger 6 is frozen as explained above, it is not needed to use a special part (for example, one with a structure that is hard to freeze, one with a structure in which dew drops hardly stay still, or the like) as the outside heat exchanger 6, and thereby a general part can be used.

The refrigeration cycle 2 in the present embodiment is constructed by only adding; to a general refrigeration cycle including a compressor 3, an inside condenser 4, an outside heat exchanger 6, a thermostatic expansion valve 7 and an inside evaporator 8; an electromagnetic valve (pressure regulator) 5 for adjusting a pressure of refrigerant to be supplied to the outside heat exchanger 6, a first bypass path 11 bypassing the outside heat exchanger 6, a first flowpath changeover 12 for changing over refrigerant flow to the outside heat exchanger 6 or to the first bypass path 11, a second bypass path 15 bypassing the inside evaporator 8, and a second flowpath changeover 16 for changing over refrigerant flow to the inside evaporator 8 or to the second bypass path 15. Therefore, according to the refrigeration cycle 2 in the present embodiment, two types of heating operations (the outside-air heat-absorption heating operation and the inside-air heat-absorption heating operation) and one type of a cooling operation (the re-heat cooling operation) can be operated by a relatively easily-operable changing-over of refrigerant flowpath with a relatively simple configuration.

The controller (determination unit) 30 judges the freezing based on difference between temperature of air after passing through the outside heat exchanger 6 and temperature of refrigerant at an outlet of the outside heat exchanger 6. Therefore, the freezing of the outside heat exchanger 6 can be easily determined unfailingly by a simple temperature comparison.

In the inside-air heat-absorption heating operation, since air inside the passenger compartment is introduced into the air-conditioner case 21 (to the inside evaporator 8 and the inside condenser 4) and recirculate it inside, heat loss in the passenger compartment hardly occurs and thereby heating with good heat efficiency can be operated.

The heater 26 is provided in addition to the inside condenser 4, and the heater 26 is controlled by the controller 30 based on temperatures detected by the foot-outlet temperature sensor S4 and the defroster/vent-outlet temperature sensor S5. Therefore, even in a case where temperature difference is made for temperatures of airs from the foot outlet port 28a and the vent outlet port 28c (a so-called bi-level mode), desired conditioned air can be supplied by adjusting a heating amount by the heater 26.

The controller 30 may calculate dew-point temperature in the passenger compartment by assuming temperature detected by the outside-air temperature sensor .S7 as window temperature and by using the inlet-air temperature and humidity sensor S6 and the outside-air temperature sensor S7, and thereby control the inside evaporator 8 based on the calculated dew-point temperature to restrict a humidifying amount so as to prevent fogging of windows.

The outside heat exchanger 6 includes plural tubes 40 and a pair of tanks 42 and 43 disposed on both ends of the plural tubes 40. In the insides of the tanks 42 and 43, partitions 48 and 49 are provided, respectively. The partition 49 disposed downstream, with respect to the two partitions 48 and 49, along the refrigerant flow path within the outside heat exchanger 6 is configured to guide introduction of refrigerant into the reservoir tank 46, and to flow the refrigerant with low flow resistance.

Therefore, when the outside heat exchanger 6 functions as a condenser (the re-heat cooling operation), the refrigerant flowing into the tank 42 from the refrigerant inlet port 44 flows from an upper portion of the tank 42 to the tubes 40 due to the partition 48, and then flows into an upper portion of the tank 43. The liquidized refrigerant flowing into the upper portion of the tank 43 flows into the reservoir tank 46 through the communication pipe 47 by being guided by the partition 49. The liquidized refrigerant over-flowing from the reservoir tank 46 flows into a lower portion of the tank 43 through the communication pipe 47, and then flows into a lower portion of the tank 42 through the tubes 40. The refrigerant flowing into the lower portion of the tank 42 flows out from the refrigerant outlet port 45, and then is sent to the thermostatic expansion valve 7.

On the other hand, when the outside heat exchanger 6 functions as an evaporator (the outside-air heat-absorption heating operation), the refrigerant flowing into the tank 42 from the refrigerant inlet port 44 flows from an upper portion of the tank 42 to the tubes 40 due to the partition 48, and then flows into an upper portion of the tank 43. The vaporized refrigerant flowing into the upper portion of the tank 43 flows into a lower portion of the tank 43 through the communication pipe 47 with circumventing the partition 49. The refrigerant gas flowing into the lower portion of the tank 43 flows into a lower portion of the tank 42 through the tubes 40. The refrigerant flowing into the lower portion of the tank 42 is flown out from the refrigerant outlet port 45. When the vaporized refrigerant circumvents the partition 49 in the tank 43, the vaporized refrigerant flows with low flow resistant because the communication pipe 47 is not divided by the partition 49. Therefore, pressure loss of the refrigerant flowing within the outside heat exchanger 6 can be kept small, and thereby reduction of heat absorption performance due to reduction of refrigerant evaporation temperature can be prevented.

In the above embodiment, the pressure regulator is configured by the electromagnetic valve 5 having a throttle function, but may be one that can selectively change over a refrigerant passageway between its opened state and its throttled state. For example, the pressure
regulator may be configured of an orifice and a bypass path that is provided parallel to the orifice and provided with a valve. In this case, the outside heat exchanger 6 is functioned as an evaporator in the outside-air heat-absorption heating operation by closing the valve and flowing refrigerant through the orifice. On the other hand, the outside heat exchanger 6 is functioned as a condenser by opening the valve and flowing refrigerant through the bypass path in the re-heat cooling operation.

In the above embodiment, the partitions 48 and 49 are provided in the insides of the pair of thanks 42 and 43 of the outside heat exchanger 6, respectively, but two or more partitions may be provided in each inside of the tanks.= In this case, the communication pipe 47 is provided at a position of a partition disposed most downstream along the refrigerant flow path within the outside heat exchanger 6.

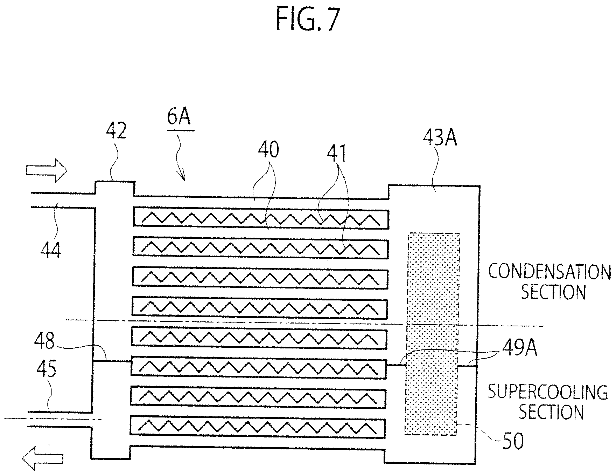

(Modified Example Of Outside Heat Exchanger) Next, a modified example of the outside heat exchanger will be explained. As shown in Fig. 7, an outside heat exchanger 6A as the modified example is formed so that its tank 43A has a larger capacity than that of the tank 43 in the above embodiment. The tank 43A is configured so that its lower portion concurrently acts as a reservoir tank. A filter 50 that is filled with desiccant agents is installed in the inside of the tank 43A. An outside of the filter 50 in the tank 43A is divided vertically by a partition 49A. The partition 49A is provided at the same height level as that of the partition 48 in the tank 42.

The refrigerant flowing into an upper portion of the tank 43A flows into a lower portion of the tank 43A only through the inside of the filter 50. An inner diameter of the partition 49A (i.e. an outer diameter of the filter 50) is set to have a size enabling the vaporized refrigerant to flow with low flow resistance. The partition 49A guides introduction of refrigerant liquid into the inside of the filter 50 when the outside heat exchanger 6 functions as a condenser, and flows refrigerant gas from top to bottom in the tank 43A with low flow resistance when the outside heat exchanger 6 functions as an evaporator.

Therefore, according to the outside heat exchanger 6A, similarly to the above-explained outside heat exchanger 6, when the outside heat exchanger 6A functions as a condenser (the re-heat cooling operation), the liquidized refrigerant flowing into the upper portion of the tank 43A flows into the lower portion of the tank 43A (corresponding to a reservoir tank) through the filter 50 by being guided by the partition 49A. On the other hand, when the outside heat exchanger 6 functions as an evaporator (the outside-air heat-absorption heating operation), when the vaporized refrigerant flows through the partition 49A in the tank 43, the vaporized refrigerant flows with low flow resistant. =Therefore, pressure loss of the refrigerant flowing within the outside heat exchanger 6A can be kept small, and thereby reduction of heat absorption performance due to reduction of refrigerant evaporation temperature can be prevented.

### (Modified Example For Changing-Over Timing Of Heating Operation)

In the above embodiment, when the outside heat exchanger 6 is frozen while the outside heat exchanger 6 is functioned as an evaporator (the outside-air heat-absorption heating operation), it is changed over to the heat absorption by the inside evaporator 8 (the inside-air heat-absorption heating operation). However, it may be changed over from the outside-air heat-absorption heating operation to the inside-air heat-absorption heating operation also in a case where fogging of windows is desired to be solved and a case where humidifying is desired for improving comfort while raining.

## Claims

1. An air-conditioner (1) for a vehicle, comprising:
a vapor-compression refrigeration cycle (2) that includes a compressor (3) for compressing refrigerant, an inside condenser (4) for exchanging heat between refrigerant compressed by the compressor (3) and air to be supplied to a passenger compartment to heat the air, an outside heat exchanger (6,6A) for exchanging heat between refrigerant and air outside a passenger compartment, and an inside evaporator (8) for exchanging heat between refrigerant and air to be supplied to a passenger compartment to cool the air, and is capable of operating an outside-air heat-absorption heating operation in which refrigerant absorbs heat at the outside heat exchanger (6, 6A)and refrigerant radiates heat at the inside condenser (4), and an inside-air heat-absorption heating operation in which refrigerant absorbs heat at the inside evaporator (8) and refrigerant radiates heat at the inside condenser (4),
**characterized in that**
the air-conditioner (1) further comprises:
a determination unit (30) for determining whether or not the outside heat exchanger (6, 6A) is frozen, and
a controller (30) that changes over the outside-air heat-absorption heating operation to the inside-air heat-absorption heating operation when the determination unit (30) determines that the outside heat exchanger (6, 6A) is frozen,
wherein the vapor-compression refrigeration cycle (2) further includes a pressure regulator (5) for regulating pressure of refrigerant to be supplied to the outside heat exchanger (6, 6A), a first bypass path (11) bypassing the outside heat exchanger (6; 6A), a first flowpath changeover unit (12) for changing over a refrigerant flow to the outside heat exchanger (6, 6A) or to the first bypass path (11), a pressure reducer (7) for reducing pressure of refrigerant to be supplied to the inside evaporator (8), a second bypass path (15) bypassing the inside evaporator (8), and a second flowpath changeover unit (16) for changing over a refrigerant flow to the inside evaporator (8) or to the second bypass path (15),
wherein, in the outside-air heat-absorption heating operation, a refrigerant path is set, in which refrigerant compressed by the compressor (3) flows sequentially through the inside condenser (4), the pressure regulator (5), the outside heat exchanger (6, 6A) and the second bypass path (15), and then returns to the compressor (3), wherein the pressure regulator (5) decompresses refrigerant, and,
wherein, in the inside-air heat-absorption heating operation, a refrigerant path is set, in which refrigerant compressed by the compressor (3) flows sequentially through the inside condenser (4), the first bypass path (11), the pressure reducer (7) and the inside evaporator (8), and then returns to the compressor (3), wherein the pressure reducer (7) decompresses refrigerant.

2. The air-conditioner (1) for a vehicle according to claim 1, wherein
the refrigeration cycle (2) is capable of further operating a re-heat cooling operation in which refrigerant absorbs heat at the inside evaporator (8) and refrigerant radiates heat at both of the inside condenser (4) and the outside heat exchanger (6, 6A), and,
in the re-heat cooling operation, a refrigerant path is set, in which refrigerant compressed by the compressor (3) flows sequentially through the inside condenser (4),
the pressure regulator (5), the outside heat exchanger (6, 6A), the pressure reducer (7) and the inside evaporator (8), and then returns to the compressor (3), wherein the pressure regulator (5) doesn't decompress refrigerant.

3. The air-conditioner (1) for a vehicle according to claim 1 or 2, further comprising
an outside-heat-exchanger passing-through air temperature detector (S1) for detecting temperature of air after passing through the outside heat exchanger (6, 6A), and a refrigerant temperature detector (S2) for detecting temperature of refrigerant at an outlet of the outside heat exchanger (6, 6A), wherein
the determination unit (30) determines whether or not the outside heat exchanger (6, 6A) is frozen based on a difference between the temperature of air detected by the outside-heat-exchanger passing-through air temperature detector (S1) and the temperature of refrigerant detected by the refrigerant temperature detector (S2).

4. The air-conditioner (1) for a vehicle according to any one of claims 1 to 3, wherein,
in the inside-air heat-absorption heating operation, air inside a passenger-compartment is supplied to the inside evaporator (8), and then supplied to the inside condenser (4).

5. The air-conditioner (1) for a vehicle according to any one of claims 1 to 4, further comprising
a heater (26) for heating air to be supplied to a passenger compartment,
a foot-outlet temperature detector (S4) for detecting temperature of air blowing out from a foot outlet port (28a), and
a defroster/vent-outlet temperature detector (S5) for detecting temperature of air blowing out from a defroster outlet port (28b) and a vent outlet port (28c), wherein
the controller (30) controls a heating amount of the heater (26) based on the temperatures of air detected by the foot-outlet temperature detector (S4) and the defroster/vent-outlet temperature detector (S5).

6. The air-conditioner (1) for a vehicle according to any one of claims 1 to 5, further comprising
an inlet-air temperature and humidity detector (S6) for detecting temperature and humidity of air to be supplied to the inside evaporator (8), and
an outside-air temperature detector (S7) for detecting temperature of outside air, wherein
the controller (30) calculates dew-point temperature in a passenger compartment based on detection results of the inlet-air temperature and humidity detector (S6) and the outside-air temperature detector (S7), and controls a humidifying amount of the inside evaporator (8) based on the calculated dew-point temperature.

7. The air-conditioner (1) for a vehicle according to any one of claims 1 to 6, wherein
the outside heat exchanger (6) includes a plurality of tubes (40), a pair of tanks (42, 43) disposed on both ends of the plurality of tubes (40), a reservoir tank (46) for accumulating refrigerant, and a plurality of partitions (48, 49), each of the tanks (42, 43) being provided with at least one of the plurality of partitions (48, 49), and
a partition (49) positioned most downstream along a refrigerant flow path within the outside heat exchanger (6) among the plurality of partitions (48, 49) is configured to be capable of guiding introduction of refrigerant into the reservoir tank (46) and to flow refrigerant with low flow resistance.

## Patentansprüche

1. Klimatisierungsvorrichtung (1) für ein Fahrzeug, die umfasst:
einen Verdichter-Kältekreislauf (2), der einen Kompressor (3) zum Verdichten von Kältemittel, einen innen befindlichen Kondensator (4), mit dem Wärme zwischen durch den Kompressor (3) verdichtetem Kältemittel und einem Fahrgastraum zuzuführender Luft ausgetauscht wird, um die Luft zu erhitzen, einen außen befindlichen Wärmetauscher (6, 6A), mit dem Wärme zwischen Kältemittel und Luft außerhalb eines Fahrgastraums ausgetauscht wird, sowie einen innen befindlichen Verdampfer (8) enthält, mit dem Wärme zwischen Kältemittel und einem Fahrgastraum zuzuführender Luft ausgetauscht wird, um die Luft zu kühlen, und der in der Lage ist, einen Vorgang zum Heizen mittels Absorption von Wärme von Außenluft, bei dem Kältemittel Wärme an dem außen befindlichen Wärmetauscher (6, 6A) absorbiert und Kältemittel Wärme an dem innen befindlichen Kondensator (4) abstrahlt, sowie einen Vorgang zum Heizen mittels Absorption von Wärme von Innenluft durchzuführen, bei dem Kältemittel Wärme an dem innen befindlichen Verdampfer (8) absorbiert und Wärme an dem innen befindlichen Kondensator (4) abstrahlt,
**dadurch gekennzeichnet, dass**
die Klimatisierungsvorrichtung (1) des Weiteren umfasst:
eine Feststell-Einheit (30), mit der festgestellt wird, ob der außen befindliche Wärmetauscher (6, 6A) eingefroren ist oder nicht,
eine Steuereinrichtung (30), die von dem Vorgang zum Heizen mittels Absorption von Wärme von Außenluft auf den Vorgang zum Heizen mittels Absorption von Wärme von Innenluft umstellt, wenn die Feststell-Einheit (30) feststellt, dass der außen befindliche Wärmetauscher (6, 6A) eingefroren ist,
wobei der Verdichter-Kältekreislauf (2) des Weiteren einen Druckregler (5), mit dem Druck von dem außen befindlichen Wärmetauscher (6, 6A) zuzuführendem Kältemittel reguliert wird, einen ersten Umgehungsweg (11), der den außen befindlichen Wärmetauscher (6; 6A) umgeht, eine erste Einheit (12) zum Umstellen eines Strömungsweges, mit der ein Kältemittel-Strom zu dem außen befindlichen Wärmetauscher (6, 6A) oder zu dem ersten Umgehungsweg (11) umgestellt wird, einen Druckminderer (7), mit dem Druck von dem innen befindlichen Verdampfer (8) zuzuführendem Kältemittel gemindert wird, einen zweiten Umgehungsweg (15), der den innen befindlichen Verdampfer (8) umgeht, sowie eine zweite Einheit (16) zum Umstellen eines Strömungsweges, mit der ein Kältemittel-Strom zu dem innen befindlichen Verdampfer (8) oder zu dem zweiten Umgehungsweg (15) umgestellt wird,
wobei bei dem Vorgang zum Heizen mittels Absorption von Wärme von Außenluft ein Kältemittel-Weg festgelegt wird, auf dem durch den Kompressor (3) verdichtetes Kältemittel sequenziell durch den innen befindlichen Kondensator (4), den Druckregler (5), den außen befindlichen Wärmetauscher (6, 6A) und den zweiten Umgehungsweg (15) strömt und dann zu dem Kompressor (3) zurückströmt, wobei der Druckregler (5) Kältemittel entspannt, und
bei dem Vorgang zum Heizen mittels Absorption von Wärme von Innenluft ein Kältemittel-Weg festgelegt wird, auf dem durch den Kompressor (3) verdichtetes Kältemittel sequenziell durch den innen befindlichen Kondensator (4), den ersten Umgehungsweg (11), den Druckminderer (7) und den innen befindlichen Verdampfer (8) strömt und dann zu dem Kompressor (3) zurückströmt, wobei der Druckminderer (7) Kältemittel entspannt.

2. Klimatisierungsvorrichtung (1) für ein Fahrzeug nach Anspruch 1, wobei
der Kältekreislauf (2) in der Lage ist, des Weiteren einen Wiedererwärmungs-Kühlvorgang durchzuführen, bei dem Kältemittel Wärme an dem innen befindlichen Verdampfer (8) absorbiert und Kältemittel Wärme sowohl an dem innen befindlichen Kondensator (4) als auch dem außen befindlichen Wärmetauscher (6, 6A) abstrahlt, und
bei dem Wiedererwärmungs-Kühlvorgang ein Kältemittel-Weg festgelegt wird, auf dem durch den Kompressor (3) verdichtetes Kältemittel sequenziell durch den innen befindlichen Kondensator (4), den Druckregler (5), den außen befindlichen Wärmetauscher (6, 6A), den Druckminderer (7) und den innen befindlichen Verdampfer (8) strömt und dann zu dem Kompressor (3) zurückströmt, wobei der Druckregler (5) Kältemittel nicht entspannt.

3. Klimatisierungsvorrichtung (1) für ein Fahrzeug nach Anspruch 1 oder 2, die des Weiteren umfasst:
eine Einrichtung (S1) zum Erfassen der Temperatur von Luft, die den außen befindlichen Wärmetauscher durchläuft, mit der Temperatur von Luft nach Durchlaufen des außen befindlichen Wärmetauschers (6, 6A) erfasst wird, sowie eine Einrichtung (S2) zum Erfassen der Temperatur von Kältemittel, mit der Temperatur von Kältemittel an einem Auslass des außen befindlichen Wärmetauschers (6, 6A) erfasst wird, wobei
die Feststell-Einheit (30) auf Basis einer Differenz zwischen der Temperatur von Luft, die durch die Einrichtung (S1) zum Erfassen der Temperatur von Luft, die den außen befindlichen Wärmetauscher durchläuft, erfasst wird, und der Temperatur, die durch die Einrichtung (S2) zum Erfassen der Temperatur von Kältemittel erfasst wird, feststellt, ob der außen befindliche Wärmetauscher (6, 6A) eingefroren ist oder nicht.

4. Klimatisierungsvorrichtung (1) für ein Fahrzeug nach einem der Ansprüche 1 bis 3, wobei
bei dem Vorgang zum Heizen mittels Absorption von Wärme von Innenluft Luft im Inneren eines Fahrgastraums dem innen befindlichen Verdampfer (8) zugeführt wird und anschließend dem innen befindlichen Kondensator (4) zugeführt wird.

5. Klimatisierungsvorrichtung (1) für ein Fahrzeug nach einem der Ansprüche 1 bis 4, die des Weiteren umfasst:
eine Heizeinrichtung (26), mit der einem Fahrgastraum zuzuführende Luft erhitzt wird,
eine Einrichtung (S4) zum Erfassen von Temperatur an einem Fuß-Auslass, mit der Temperatur von Luft erfasst wird, die über eine Fuß-Auslassöffnung (28a) ausgeblasen wird, und
eine Einrichtung (S5) zum Erfassen von Temperatur an einem Defroster-/Belüftungs-Auslass, mit der Temperatur von Luft erfasst wird, die über eine Defroster-Auslassöffnung (28b) und eine Belüftungs-Auslassöffnung (28c) erfasst wird, wobei
die Steuereinrichtung (30) ein Maß des Erhitzens durch die Heizeinrichtung (26) auf Basis der durch die Einrichtung (S4) zum Erfassen von Temperatur an einem Fuß-Auslass sowie die Einrichtung (S5) zum Erfassen von Temperatur an einem Defroster-/Belüftungs-Auslass erfassten Temperaturen von Luft steuert.

6. Klimatisierungsvorrichtung (1) für ein Fahrzeug nach einem der Ansprüche 1 bis 5, die des Weiteren umfasst:
eine Einrichtung (S6) zum Erfassen von Temperatur und Feuchtigkeit von Einlassluft, mit der Temperatur und Feuchtigkeit von dem innen befindlichen Verdampfer (8) zuzuführender Luft erfasst werden, sowie
eine Einrichtung (S7) zum Erfassen von Temperatur von Außenluft, mit der Temperatur von Außenluft erfasst wird, wobei
die Steuereinrichtung (30) Taupunkt-Temperatur in einem Fahrgastraum auf Basis von Erfassungsergebnissen der Einrichtung (S6) zum Erfassen von Temperatur und Feuchtigkeit von Einlassluft und der Einrichtung (S7) zum Erfassen von Temperatur von Außenluft berechnet und ein Maß der Befeuchtung durch den innen befindlichen Verdampfer (8) auf Basis der berechneten Taupunkt-Temperatur steuert.

7. Klimatisierungsvorrichtung (1) für ein Fahrzeug nach einem der Ansprüche 1 bis 6, wobei
der außen befindliche Wärmetauscher (6) eine Vielzahl von Röhren (40), ein Paar Behälter (42, 43), die an beiden Enden der Vielzahl von Röhren (40) angeordnet sind, einen Vorratsbehälter (46) zum Akkumulieren von Kältemittel sowie eine Vielzahl von Trennwänden (48, 49) enthält, wobei jeder der Behälter (42, 43) mit wenigstens einer der Vielzahl von Trennwänden (48, 49) versehen ist, und
eine Trennwand (49), die an dem Kältemittel-Strömungsweg im Inneren des außen befindlichen Wärmetauschers (6) von der Vielzahl von Trennwänden (48, 49) am weitesten stromab positioniert ist, so eingerichtet ist, dass sie Einleiten von Kältemittel in den Vorratsbehälter (46) führen und Kältemittel mit geringem Strömungswiderstand leiten kann.

## Revendications

1. Climatiseur (1) pour un véhicule, comprenant :
un cycle de réfrigération à compression de vapeur (2) qui inclut un compresseur (3) pour la compression d'un fluide caloporteur, un dispositif de condensation interne (4) pour échanger de la chaleur entre le fluide caloporteur comprimé par le compresseur (3) et l'air à alimenter au niveau de l'habitacle pour chauffer l'air, un échangeur de chaleur externe (6, 6A) pour échanger de la chaleur entre le fluide caloporteur et l'air à l'extérieur de l'habitacle, et un évaporateur interne (8) pour échanger de la chaleur entre le fluide caloporteur et l'air à alimenter au niveau d'un habitacle pour refroidir l'air, et qui est capable d'exécuter une opération de chauffage par absorption de chaleur de l'air externe dans laquelle le fluide caloporteur absorbe la chaleur située au niveau de l'échangeur de chaleur externe (6, 6A) et le fluide caloporteur irradie la chaleur au niveau du dispositif de condensation interne (4), et une opération de chauffage par absorption de chaleur d'air interne dans laquelle le fluide caloporteur absorbe la chaleur au niveau de l'évaporateur interne (8) et le fluide caloporteur irradie la chaleur au niveau du dispositif de condensation interne (4),
**caractérisé en ce que**
le climatiseur (1) comprend en outre :
une unité de détermination (30) pour déterminer le fait ou pas que l'échangeur de chaleur externe (6, 6A) soit froid, et
un dispositif de commande (30) qui fait passer de l'opération de chauffage par absorption de chaleur d'air externe vers l'opération de chauffage par absorption de chaleur d'air de l'air interne lorsque l'unité de détermination (30) détermine que l'échangeur de chaleur externe (6, 6A) est froid,
dans lequel le cycle de réfrigération par compression de vapeur (2) inclut en outre un régulateur de pression (5) pour réguler la pression du fluide caloporteur à alimenter au niveau de l'échangeur de chaleur externe (6, 6A), un premier passage de contournement (11) contournant l'échangeur de chaleur externe (6, 6A), une première unité de transition de voie d'écoulement (12) pour passer d'un écoulement de fluide caloporteur vers l'échangeur de chaleur externe (6, 6A) ou vers le premier passage de contournement (11), un réducteur de pression (7) pour réduire la pression du fluide caloporteur à alimenter au niveau de l'évaporateur interne (8), un second passage de contournement (15) contournant l'évaporateur interne (8), et une seconde unité de transition de voie d'écoulement (16) pour passer d'un écoulement de fluide caloporteur vers l'évaporateur interne (8) ou vers le second passage de contournement-(15),
dans lequel, dans l'opération de chauffage par absorption de chaleur d'air externe, une voie d'écoulement de fluide caloporteur est installée, dans laquelle le fluide caloporteur comprimé par le compresseur (3) s'écoule de manière séquentielle à travers le dispositif de condensation interne (4), le régulateur de pression (5), l'échangeur de chaleur externe (6, 6A) et le second passage de contournement (15), et ensuite retourne au compresseur (3), dans lequel le régulateur de pression (5) décomprime le fluide caloporteur, et,
dans lequel, dans l'opération de chauffage par absorption de chaleur d'air interne, une voie d'écoulement de fluide caloporteur est mise en place, dans laquelle le fluide caloporteur comprimé par le compresseur (3) s'écoule séquentiellement à travers le dispositif de condensation interne (4), le premier passage de contournement (11), le réducteur de pression (7) et l'évaporateur interne (8), et retourne ensuite vers le compresseur (3), dans lequel le réducteur de pression (7) décomprime le fluide caloporteur.

2. Climatiseur (1) pour véhicule selon la revendication 1, dans lequel
le cycle de réfrigération (2) est capable d'exécuter en outre une opération de refroidissement par répétition du chauffage dans laquelle le fluide caloporteur absorbe la chaleur au niveau de l'évaporateur interne (8) et le fluide caloporteur irradie la chaleur à la fois du dispositif de condensation interne (4) et de l'échangeur de chaleur externe (6, 6A), et,
dans l'opération de refroidissement par répétition du chauffage, une voie d'écoulement de fluide caloporteur est mise en place, dans laquelle le fluide caloporteur comprimé par le compresseur (3) s'écoule séquentiellement à travers le dispositif de condensation interne (4), le régulateur de pression (5), l'échangeur de chaleur externe (6, 6A), le réducteur de pression (7) et l'évaporateur interne (8), et ensuite revient au compresseur (3), dans lequel le régulateur de pression (5) ne décomprime pas le fluide caloporteur.

3. Climatiseur (1) pour véhicule selon la revendication 1 ou 2, comprenant en outre
un détecteur de température d'air passant à travers l'échangeur de chaleur externe (S1) pour la détection de la température de l'air après le passage à travers l'échangeur de chaleur externe (6, 6A), et un détecteur de température de fluide caloporteur (S2) pour détecter la température du fluide caloporteur au niveau d'un orifice d'échappement de l'échangeur de chaleur externe (6, 6A), dans lequel
l'unité de détermination (30) détermine le fait ou pas que l'échangeur de chaleur externe (6, 6A) soit froid sur la base d'une différence entre la température de l'air détectée par le détecteur de température d'air passant à travers l'échangeur de chaleur externe (S1) et la température du fluide caloporteur détectée par le détecteur de température du fluide caloporteur (S2).

4. Climatiseur (1) pour véhicule selon l'une quelconque des revendications 1 à 3, dans lequel,
dans l'opération de chauffage par absorption de chaleur d'air interne, l'air à l'intérieur d'un habitacle est alimenté au niveau de l'évaporateur interne (8), et ensuite alimenté au dispositif de condensation interne (4).

5. Climatiseur (1) pour véhicule selon l'une quelconque des revendications 1 à 4, comprenant en outre
un dispositif de chauffage (26) pour chauffer l'air à alimenter au niveau de l'habitacle,
un détecteur de température de sortie au niveau des pieds (S4) pour détecter la température de l'air soufflant depuis un orifice de sortie au niveau des pieds (28a), et
un détecteur de température de l'orifice de sortie avec dégivrage/ventilation (S5) pour détecter la température de l'air soufflant d'un orifice de sortie avec dégivrage (28b) et un orifice de sortie de ventilation (28c), dans lequel
le dispositif de commande (30) commande un niveau de chauffage du dispositif chauffant (26) sur la base des températures de l'air détectées par le détecteur de température de sortie au niveau des pieds (S4) et le détecteur de température de l'orifice de sortie avec dégivrage/ventilation (S5).

6. Climatiseur (1) pour véhicule selon l'une quelconque des revendications 1 à 5, comprenant en outre
un détecteur de température et d'humidité de l'air d'entrée (S6) pour détecter la température et l'humidité de l'air à alimenter au niveau de l'évaporateur interne (8), et
un détecteur de température de l'air externe (S7) pour détecter la température de l'air externe,
le dispositif de commande (30) calculant la température du point de rosée dans un habitacle sur la base des résultats de détection du détecteur de température et d'humidité de l'air d'entrée (S6) et du détecteur de température de l'air externe (S7), et commandant un niveau d'humidification de l'évaporateur interne (8) sur la base de la température calculée du point de rosée.

7. Climatiseur (1) pour véhicule selon l'une quelconque des revendications 1 à 6, dans lequel
l'échangeur de chaleur externe (6) inclut une pluralité de tubes (40), une paire de cuves (42, 43) disposées aux deux extrémités de la pluralité de tubes (40), une cuve formant réservoir (46) pour emmagasiner le fluide caloporteur, et une pluralité de séparations (48, 49), chacune des cuves (42, 43) étant prévue avec au moins l'une de la pluralité des séparations (48, 49), et
une séparation (49) positionnée le plus en aval le long d'une voie d'écoulement de fluide caloporteur à l'intérieur de l'échangeur de chaleur externe (6) parmi la pluralité de séparations (48, 49) est configurée pour être capable de guider l'introduction d'un fluide caloporteur dans la cuve formant réservoir (46) et de faire s'écouler le fluide caloporteur avec une faible résistance à l'écoulement.
